# EUROPÄISCHE PATENTSCHRIFT

(11) **EP 4 042 545 B1**
(45) Veröffentlichungstag und Bekanntmachung des Hinweises auf die Patenterteilung: **01.11.2023**
(21) Anmeldenummer: 20781510.1
(22) Anmeldetag: 28.09.2020
(51) Int. Cl.: H02K 1/20, H02K 9/19

(54) **ELEKTRISCHE MASCHINE MIT INTEGRIERTEM KÜHLSYSTEM**
ELECTRIC MACHINE WITH INTEGRATED COOLING SYSTEM
MACHINE ÉLECTRIQUE À SYSTÈME INTÉGRÉ DE REFROIDISSEMENT

(30) Priorität: 08.10.2019 DE 102019215402
(43) Veröffentlichungstag der Anmeldung: 17.08.2022
(73) Patentinhaber: Magna PT B.V. & Co. KG, 74199 Untergruppenbach (DE)
(72) Erfinder: STRIEDELMEYER, Thomas, 70378 Stuttgart (DE)
(74) Vertreter: Reuter, Silke Beatrix
(86) Internationale Anmeldenummer: PCT/EP2020/077151
(87) Internationale Veröffentlichungsnummer: WO 2021/069253

(56) Entgegenhaltungen:
- EP-A2- 1 600 253
- DE-B4-102012 022 452
- US-A1- 2019 006 914

## Beschreibung

Die vorliegende Erfindung betrifft eine elektrische Maschine mit integriertem Kühlsystem.

Ein Großteil des Energiebedarfs eines Kraftfahrzeugs mit konventionellem Antrieb, d.h. mit einer Verbrennungskraftmaschine, geht auf die Verluste im Antriebsstrang zurück. Eine Erweiterung des Antriebsstrangs um eine elektrische Maschine ermöglicht einen hybriden Betrieb von elektrischer Maschine und Verbrennungskraftmaschine und trägt durch unterschiedliche Betriebsmodi wie Rekuperation, Boosten, elektrisches Fahren, Start/Stopp Automatik zu einer Erhöhung der Gesamteffizienz bei.

Elektrische Maschinen wandeln elektrische Energie in mechanische um und umgekehrt. Im Kraftfahrzeug werden Drehstrommaschinen eingesetzt. Diese bestehen aus einem Stator (stationären Teil) und einem Rotor/Läufer (rotierendes Teil). Durch den Rotor wird die mechanische Energie übertragen.

Bei Betrieb der elektrischen Maschine entstehen insbesondere im Stator erhebliche Wärmemengen. Um den Wirkungsgrad und die Lebensdauer der elektrischen Maschinen zu erhöhen, weisen diese typischerweise Kühlvorrichtungen auf.

Eine elektrische Maschine mit einer integrierten Kühlvorrichtung ist beispielsweise aus der DE 10 2008 001 621 A1 bekannt. Die dort beschriebene elektrische Maschine weist eine Kühlvorrichtung auf, die in der Gehäusewand verlaufende Kühlkanäle aufweist, wobei das Kühlmittel über eine Kühlmittelsprüheinrichtung auf die Stirnseite des Stators gesprüht wird.

Die im hybridisierten Antriebsstrang integrierten elektrischen Maschinen können örtlich nahe an mechanischen Komponenten des Getriebes verbaut sein, insbesondere in einem gemeinsamen Getriebegehäuse. Derartige Getriebe, die weitere Aggregate wie auch den Elektromotor im Getriebegehäuse enthalten werden als sogenannte "Hybridgetriebe" bezeichnet. Problematisch bei den Hyridgetrieben ist insbesondere der geringe zur Verfügung stehende Bauraum.

Bei den Hybridgetrieben sind Ausführungsformen bekannt, bei denen die elektrische Maschine ein offenes Gehäuse aufweist. Sogenannte Lagerschilde bilden die seitlichen Gehäusedeckel und sind orthogonal zur Rotorwelle angeordnet. Das Blechpaket des Stators wird dabei durch zwischen den Lagerschilden angeordnete Zuganker fixiert. Zur Schmierung und Kühlung der Komponenten des Hybridgetriebes, wie der elektrischen Maschine und des als Doppelkupplungsgetriebes ausgebildeten Getriebes ist es bekannt, im Inneren des Getriebegehäuses einen Ölkreislauf auszubilden. Hierbei wird das Öl in einem üblicherweise in Einbaulage unten im Getriebegehäuse angeordneten Ölsumpf gesammelt und von dort zu den Komponenten, beispielsweise zu verbauten Kupplungen des Getriebes und der elektrischen Maschine, geleitet (Sumpfkühlung). Die Rotorwelle der elektrischen Maschine ist dabei als Hohlwelle mit Bohrungen ausgeführt, wobei das Öl entsprechend in die Bohrungen gepumpt wird. Ausgehend von den Bohrungen wird das Kühlöl durch Fliehkraft an die Innenseite der Statorwicklung der elektrischen Maschine geschleudert und somit eine Kühlung erzielt.

Beim Einsatz einer elektrischen Maschine in Hochvolttechnologie entspricht der Außendurchmesser des Blechpakets des Stators nahezu dem Außendurchmesser der Lagerschilde. Eine alternative Ausführungsform einer Kühlung über einen Kühlmantel der als zylindrische Gehäusewandung einer elektrischen Maschine mit einem geschlossenen Gehäuse ausgebildet wird, ist bei einem Hybridgetriebe aufgrund des geringen radialen Freiraums zwischen dem Blechpaket des Stators und einem realisierbaren äußeren Durchmesser der elektrischen Maschine bei begrenztem Bauraum insbesondere bei Hochvolt Anwendungen nicht möglich.

Weitere Ausführungsformen von Kühlungen des Stators sind aus der DE 10 2012 022 452 B4 und DE 10 2012 017 293 A1 bekannt.

Zwecks Kühlung sind bei der DE 10 2012 022 452 B4 im Bereich des Außenumfangs des Stators eine Vielzahl von Kühlkanälen angeordnet. Die Kühlkanäle sind unter Bildung von Mäanderanordnungen miteinander verbunden sind. Die Mäanderanordnungen sind parallel an eine Fluidversorgungseinrichtung angeschlossen und werden mit Kühlfluid durchflossen. An den Enden des Stators sind Ringkanäle vorgesehen, die eine Kühlung der Wickelköpfe erlauben.

Bei der DE 10 2012 017 293 A1 ist die elektrische Maschine mit einem zylindrischen Gehäuseabschnitt ausgebildet. Innerhalb des Gehäuseabschnitts ist ein Stator angeordnet, der starr mit dem Gehäuseabschnitt verbunden ist. Der Stator weist einen Statorkern auf, an dem eine Mehrzahl von Statorwicklungen ausgebildet sind. Die Statorkühlanordnung wird über eine Vielzahl von Kühlkanälen gebildet, die zwischen dem Statorkern und dem Gehäuseabschnitt angeordnet sind. Der Statorkern ist hierfür als Statorblechpaket aus einer Vielzahl von Statorblechen zusammengesetzt. Nachteilig bei dieser Ausführungsform ist unter anderem der hohe Aufwand. Bei der Herstellung des Blechpakets, müssen viele verschiedene Statorbleche gerichtet gegeneinander zusammengebaut werden, was einen hohen Kosten- und Montageaufwand bedeutet. Eine beidseitige Kühlung der Wickelköpfe des Stators ist nicht gleichmäßig und daher ungenügend erzielbar.

Eine gleichmäßige Kühlung der Wickelköpfe ist aus der US 2019/0006914 A1 bekannt. Bei dieser Kühlvorrichtung wird das Kühlfluid über eine axial in dem zylindrischen Gehäuse der elektrischen Maschine angeordneten Fluidkanal zu geschlitzten Ringscheiben geleitet, die dann eine gleichmäßige Verteilung des Kühlfluids radial von außen auf die Wickelköpfe bewirken.

Die DE 197 49 108 C1 offenbart einen Elektromotor mit Kühlung und einem gehäuselosen Stator. Der Stator ist mit Kühlnuten versehen, in denen Kühlrohre angeordnet sind. Die Kühlrohre sind mit dem Statorblechpaket und den Wickelköpfen durch einen wärmeleitenden Kunststoff verbunden.

Des Weiteren ist aus der WO 2019/ 091 351 A1 eine Kühlung eines Elektromotors bekannt. Das Kühlsystem zum Kühlen des Stators umfasst dabei eine Vielzahl von Kühlkanäle, die sich entlang eines Umfangsabschnitts des Stators erstrecken. Durch die Kühlkanäle wird ein Kühlfluid geführt, welches in beidseits der Wickelköpfe angeordnete Fluidkanäle mündet. Die Fluidkanäle sind mit Durchgangsöffnungen zur gleichmäßigen Verteilung des Kühlfluids auf die Wickelköpfe ausgeführt.

Aufgabe der vorliegenden Erfindung ist es daher eine elektrische Maschine mit einem Kühlsystem, insbesondere eine elektrische Maschine für einen hybridisierten Antriebsstrang eines Fahrzeugs derart weiterzubilden, dass eine effektive Kühlung des Stators und insbesondere gleichmäßige Kühlung der Wickelköpfe erzielbar ist, wobei die elektrische Maschine hinsichtlich der Baugröße möglichst kompakt aufgebaut sein soll. Des Weiteren soll der Herstell- und Montageaufwand für die elektrische Maschine gering sein.

Diese Aufgabe löst die vorliegende Erfindung durch eine elektrische Maschine mit den in Patentanspruch 1 angegebenen Merkmalen.

Durch die erfindungsgemäße Ausführung ist eine verbesserte Kühlung für die elektrische Maschine möglich, die durch eine optimale Kühlung der Wickelköpfe und des an die Wickelköpfe anliegenden Blechpakets erreicht wird. Insbesondere wird kein weiterer Bauraum in radialer Richtung zur Ausbildung der Kühlanordnung benötigt.

Dies wird dadurch erreicht, dass in dem Blechpaket am Außenumfang genau eine nutartige Aussparung ausgebildet wird, in der eine Fluidleitung ausgebildet ist. Diese dient der Zuführung des Kühlfluids zu beidseits axial ausgebildeten radialer umlaufender Fluidkanäle und zu ringförmigen Elementen, die zur gleichmäßigen Verteilung des Kühlfluids Durchgangsbohrungen/Schlitze aufweisen.

In einer bevorzugten Ausführungsform wird die Fluidleitung mittels eines rohrförmigen Elementes ausgebildet, das in der nutartigen Aussparung eingesetzt ist. Bei dieser Ausführungsform fließt das Kühlfluid in dem eingesetzten rohrförmigen Element.

Zwecks gleichmäßiger Verteilung des Kühlfluids auf beide Wickelköpfe ist das rohrförmige Element mit einer in Axialrichtung gesehen mittig eingebrachten Kühlfluidzuführöffnung versehen.

Erfindungsgemäß werden die Fluidkanäle über die Anordnung und Ausbildung der ringförmigen Elemente gebildet. Die radial umlaufenden Fluidkanäle werden über ein oder mehrere Statorbleche mit reduziertem Außendurchmesser gebildet.

Vorteilhafterweise sind die Durchgangsbohrungen/Schlitze gleichmäßig verteilt über den gesamten Umfang der ringförmigen Elemente eingebracht.

Vorteilhafte Ausgestaltungen der vorliegenden Erfindung sind in den Unteransprüchen angegeben.

Im Sinne der vorliegenden Erfindung bedeutet axial in Richtung der Rotationsachse verlaufend, radial bedeutet orthogonal dazu verlaufend. Von innen nach außen verlaufend bedeutet eine Richtung ausgehend von der Rotationsachse der Motorwelle nach radial außen verlaufend. Von außen nach innen verlaufend bedeutet eine Richtung ausgehend von dem Gehäuse nach radial innen zu der Rotationsachse verlaufend.

Die Erfindung wird nachfolgend anhand in den Zeichnungen schematisch dargestellter Ausführungsbeispiele beschrieben.

Es zeigt:
- Fig. 1: einen Antriebsstrang eines Kraftfahrzeugs mit einem Hybridgetriebe,
- Fig. 2: einen Ausschnitt einer elektrischen Maschine in einer schematischen Darstellung in einer Schnittdarstellung in einer nicht erfindungsgemäßen Ausführungsform,
- Fig. 3: ein Ausschnitt der elektrischen Maschine gemäß Figur 2 in einer schematischen Darstellung mit eingezeichneter Kühlfluidführung,
- Fig. 4: eine perspektivische Darstellung des Rotors und des Stators der elektrischen Maschine in der nicht erfindungsgemäßen Ausführungsform,
- Fig. 5: eine perspektivische Teilansicht des Rotors und des Stators mit eingesetztem rohrförmigem Element zur Kühlfluidverteilung an die Stirnseiten des Stators,
- Fig. 6: eine vergrößerte perspektivische Schnittansicht auf das Detail der Kühlfluidzuführung über das rohrförmige Element zu den ringförmigen Elementen im Bereich des ersten Wickelkopfes,
- Fig. 7: eine perspektivische Darstellung des ringförmigen Elementes als Einzelteil,
- Fig. 8: einen Ausschnitt einer elektrischen Maschine in einer schematischen Darstellung in einer Schnittdarstellung in einer erfindungsgemäßen Ausführungsform,
- Fig. 9: ein Ausschnitt der elektrischen Maschine gemäß Figur 8 in einer schematischen Darstellung mit eingezeichneter Kühlfluidführung,
- Fig. 10: eine axiale Ansicht auf die Stirnseite des Stators und Rotors mit ringförmigem Element,
- Fig. 11: eine vergrößerte perspektivische Ansicht des Stators mit axialer Nut, radialem Kanal und ringförmigem Element zur Verteilung des Kühlfluids gemäß der erfindungsgemäßen Ausführungsform,
- Fig. 12: eine perspektivische Teilansicht des Stators gemäß Figur 11 mit eingesetztem rohrförmigem Element,
- Fig. 13: eine vergrößerte Detailschnittdarstellung der Kühlfluidzuführung durch das rohrförmige Element, den ringförmigen Kanal und das ringförmige Element zu einem Wickelkopf,
- Fig. 14: einen Querschnitt durch den Stator und Rotor im Bereich des rohrförmigen Elements; und
- Fig. 15: einen Querschnitt durch den Stator und den Rotor im Bereich des ringförmigen Elements.

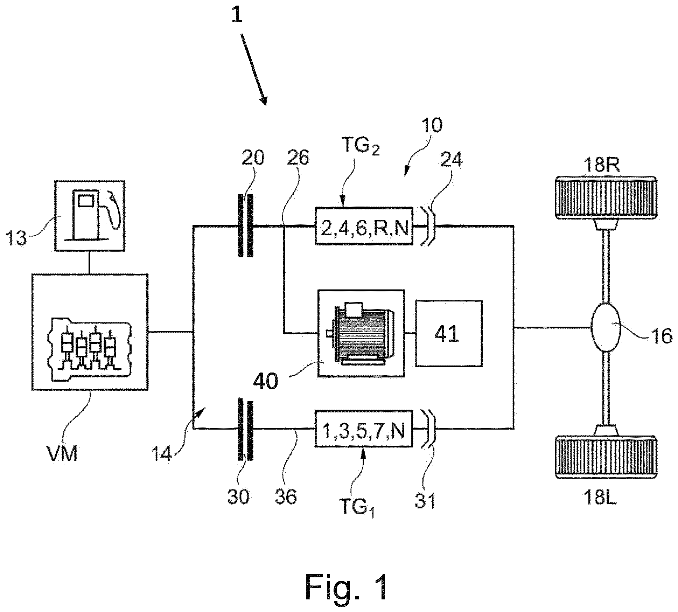

In Figur 1 ist in einer schematischen Darstellung ein Antriebsstrang 10 eines Fahrzeugs mit einem Hybridgetriebe 1 dargestellt. Der Antriebsstrang 10 nach Figur 1 beinhaltet einen Antriebsmotor VM, beispielsweise in Form eines Verbrennungsmotors, der aus einem Energiespeicher wie einem Kraftstofftank 13 versorgt wird. Ferner beinhaltet der Antriebsstrang 10 ein Doppelkupplungsgetriebe 14, dessen Abtriebsseite mit einem Differential 16 verbunden ist. Das Differential 16 verteilt Antriebsleistung auf ein linkes und ein rechtes angetriebenes Rad 18L, 18R. Das Doppelkupplungsgetriebe 14 beinhaltet eine zweite Reibkupplung 20 sowie ein zweites Teilgetriebe TG2. Das zweite Teilgetriebe TG2 beinhaltet beispielsweise Gangstufen N, 2, 4, 6, R, die mittels schematisch angedeuteter Schaltkupplungen 24 ein- und auslegbar sind. Die zweite Reibkupplung 20 und das zweite Teilgetriebe TG2 bilden einen zweiten Leistungsübertragungspfad 26 zur Übertragung von Leistung von dem Antriebsmotor VM zu dem Differential 16. Das Doppelkupplungsgetriebe 14 beinhaltet ferner eine erste Reibkupplung 30 sowie ein erstes Teilgetriebe TG1. Das erste Teilgetriebe TG1 beinhaltet beispielsweise die ungeraden Gangstufen N, 1, 3, 5, 7 etc., die mittels zugeordneter Schaltkupplungen 31 ein- und auslegbar sind. Die erste Reibkupplung 30 und das erste Teilgetriebe TG1 bilden einen ersten Leistungsübertragungspfad 36 zur Übertragung von Antriebsleistung von dem Antriebsmotor VM zu dem Differential 16. Erste und zweite Reibkupplung 30, 20 sind konzentrisch zueinander angeordnet.

Ferner beinhaltet der Antriebsstrang 10 eine elektrische Maschine 40, die mit einer Anordnung 41 zur Ansteuerung und Energieversorgung verbunden ist. Die Anordnung 41 kann beispielsweise eine Leistungselektronik mit einem Umrichter sowie eine Batterie beinhalten. Eventuell ist auch die Getriebesteuerung integriert. Bei einer Ausführung als Plug-In Hybrid ist die Batterie als Hochvolt-Batterie ausgeführt und über eine externe Stromquelle aufladbar. Die elektrische Maschine EM 40 ist an das zweite Teilgetriebe TG2 fest angebunden, beispielsweise mittels eines Stirnradsatzes oder dergleichen.

Die Steuerung des Getriebes und der elektrischen Maschine 40 (Elektromotor) erfolgt über einen Inverter. Die dargestellte Anordnung ist nur ein mögliches Ausführungsbeispiel.

Elektrische Maschinen 40 wandeln elektrische Energie in mechanische um und umgekehrt. Im Kraftfahrzeug werden Drehstrommaschinen eingesetzt. Diese bestehen wie nachfolgend näher beschrieben aus einem in einem Gehäuse aufgenommenen Stator (stationären Teil) und einem Rotor (rotierendes Teil). Dieser grundsätzliche Aufbau ist dem Fachmann bekannt und wird daher nicht in allen Einzelheiten beschrieben.

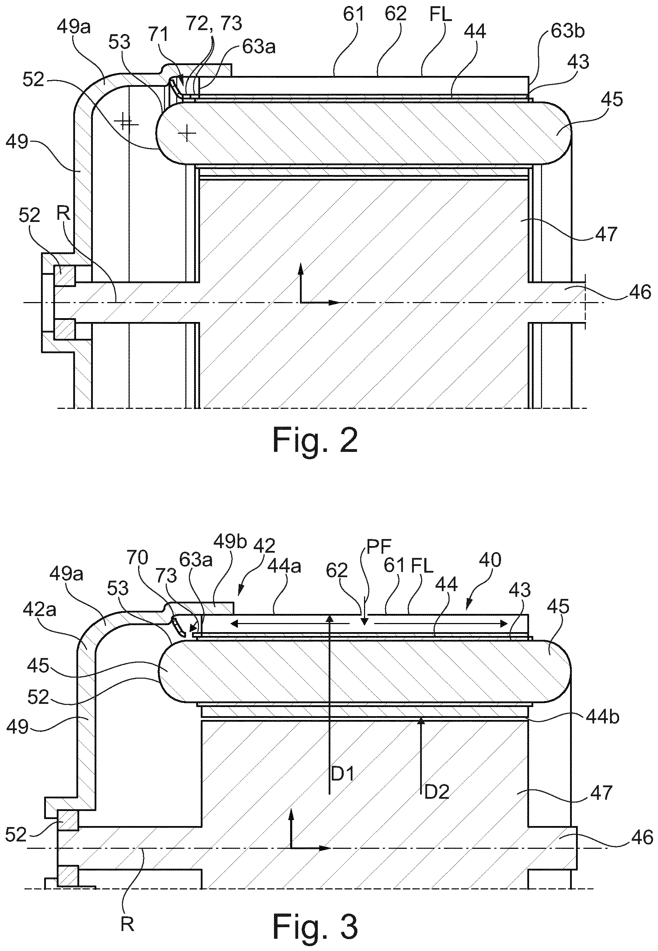

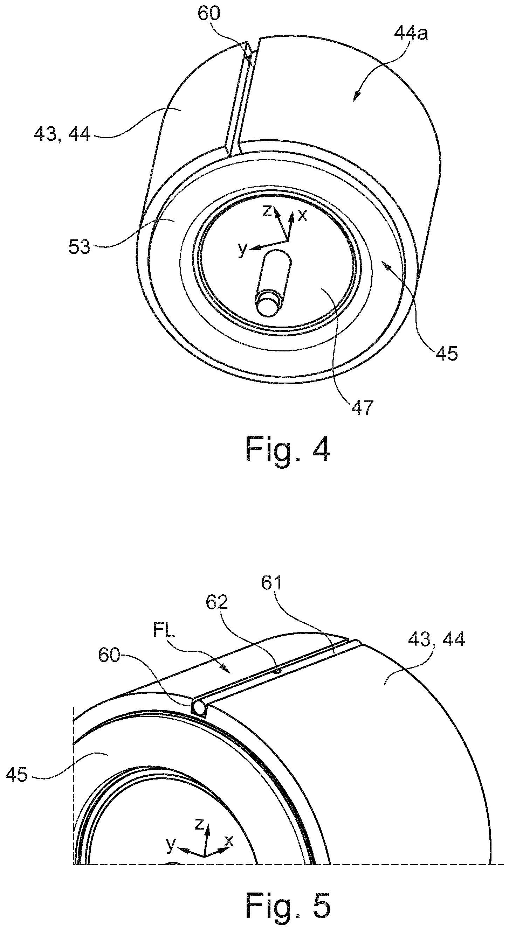

In den Figuren 2-7 wird ein nicht erfindungsgemäßes Ausführungsbeispiel einer elektrischen Maschine 40 gezeigt. Die elektrische Maschine 40 weist in einem offenen Gehäuse 42, das über Gehäuseabschnitte 42a gebildet wird, einen ortsfest angeordneten Ständer bzw. Stator 43 mit Statorkern 44 auf, an dem eine Vielzahl von Statorwicklungen ausgebildet sind. Seitlich wird der Statorkern 44 des Stators 43 von Wickelköpfen 45 der elektrischen Wicklung (Statorwicklung) überragt. Die Wickelköpfe 45 weisen eine innere Umfangsfläche 52 und eine äußere Umfangsfläche 53 auf.

Der Statorkern 44 ist aus einer Vielzahl von Statorblechen zu einem Statorblechpaket 44b zusammengesetzt, wie es aus dem Stand der Technik bekannt ist. Der Statorkern 44 weist eine Außenmantelfläche 44a mit einem Durchmesser D1 und eine Innenmantelfläche 44b mit einem Durchmesser D2 auf.

Radial innerhalb des Stators 43 ist ein Rotor 47 angeordnet, der an dem Gehäuse 42 drehbar gelagert ist.

Der Rotor 47 ist beispielsweise als Rotorblechpaket ausgeführt und umfasst eine Vielzahl von Rotorblechen. Ferner umfasst der Rotor 47 eine Motorwelle 46, auf der der Rotor 47 drehfest angeordnet ist. Die Motorwelle 46 besitzt eine Längsachse bzw. Rotationsachse R.

Beidseits der Motorwelle 46 sind jeweils deckelförmiger Lagerschilde 49 angeordnet, die als Gehäuseabschnitte 42a das offene Gehäuse 42 bilden und die elektrische Maschine 40 in axialer Richtung begrenzen. Die beiden Lagerschilde 49 sind orthogonal zur Motorwelle 46 angeordnet. An ihrem radial gesehen äußeren Umfangsbereich 49a weisen die Lagerschilde 49 einen axial nach innen sich erstreckenden umlaufenden Rand 49b auf. Der Umfangsbereich 49a ist mit Gewinde und Befestigungsösen ausgeführt, um den Stator 43 zwischen den Lagerschilden 49 aufzunehmen und über Zuganker einzuspannen. Dies ist zeichnerisch nicht dargestellt.

Lagerschilde 49 sind die A- und B- seitigen Deckel des Motorgehäuses 42. Die A- und B- Seite eines Motorgehäuses liegen orthogonal zur Rotorwelle. Als A- Seite wird die Lastseite bezeichnet, an der Lastseite der elektrischen Maschine bzw. an die Motorwelle wird bei der Integration der elektrischen Maschine in einen Hybrid-Antriebsstrang eines Kraftfahrzeugs ein nicht dargestelltes Getriebe beispielsweise ein Doppelkupplungsgetriebe 14 angebunden. Die B- Seite ist die Geberseite der elektrischen Maschine.

Die Lagerung der Motorwelle 46 erfolgt über Wellenlager 52, vorzugsweise Kugelllager die zwischen Motorwelle 46 und den beidseitig angeordneten Lagerschildern 49 eingebracht sind. Zur Aufnahme der Wellenlager 52 sind die Lagerschilde 49 mit einem ringförmigen axial sich erweiternden Abschnitt ausgeführt.

Die elektrische Maschine 40 kann nicht nur als Elektromotor, sondern auch als Generator betrieben werden, um auf diese Weise einen Ladestrom zum Laden einer elektrischen Batterie des Antriebsstrangs 10 zu erzeugen.

Die elektrische Maschine ist mit einem integrierten Kühlsystem zur Kühlung des Statorkerns und insbesondere der Wickelköpfe ausgeführt, welches nachfolgend anhand der Detaildarstellungen der Figuren 2 - 7 in einer nicht erfindungsgemäßen Ausführungsform näher beschrieben ist.

Das Kühlsystem beinhaltet einen axial verlaufenden Fluidkanal FL, der in einer axial verlaufenden Nut 60, die in der Außenmantelfläche 44a des Statorkerns 44 gebildet ist, verläuft. Die axial verlaufende Nut 60 wird über entsprechend gefertigte Statorbleche gebildet, in die bei der Fertigung zusätzlich zu den üblichen Aussparungen für z.B. die Statorwicklungen eine viereckige oder halbrunde Aussparung an einer Position am Außendurchmesser D1 ausgeführt wird. Beim anschließenden Zusammensetzen der derart gefertigten einzelnen Statorbleche ergibt sich die vorbeschriebene axial verlaufende Nut 60. Die einzelnen zu dem Statorblechpaket 44b zusammengefügten Statorbleche sind der Einfachheit halber zeichnerisch nicht dargestellt.

In diese axial verlaufende Nut 60 ist ein dem Querschnitt der Nut 60 angepasstes rohrförmiges Element 61, welches eine axial verlaufende Fluidleitung FL bildet, eingefügt. In Axialrichtung gesehen mittig ist das rohrförmige Element mit einer Bohrung als Fluideinlassöffnung 62 versehen. Die beiden offenen gegenüberliegenden Enden 63a, b des rohrförmigen Elementes 61 bilden Fluidauslassöffnungen.

Der Fluidanschluss über die Fluideinlassöffnung 62 ist zeichnerisch nicht dargestellt. Dieser wird von einer Fluidpumpe mit Kühlfluid, vorzugsweise Öl versorgt.

Das Kühlsystem umfasst des Weiteren ringförmige Elemente 70, die zwischen den Endbereichen bzw. Stirnseiten des Statorkerns 44 und dem Lagerschild 49 verspannt angeordnet sind und einen radial umlaufenden Fluidkanal 71 bilden.

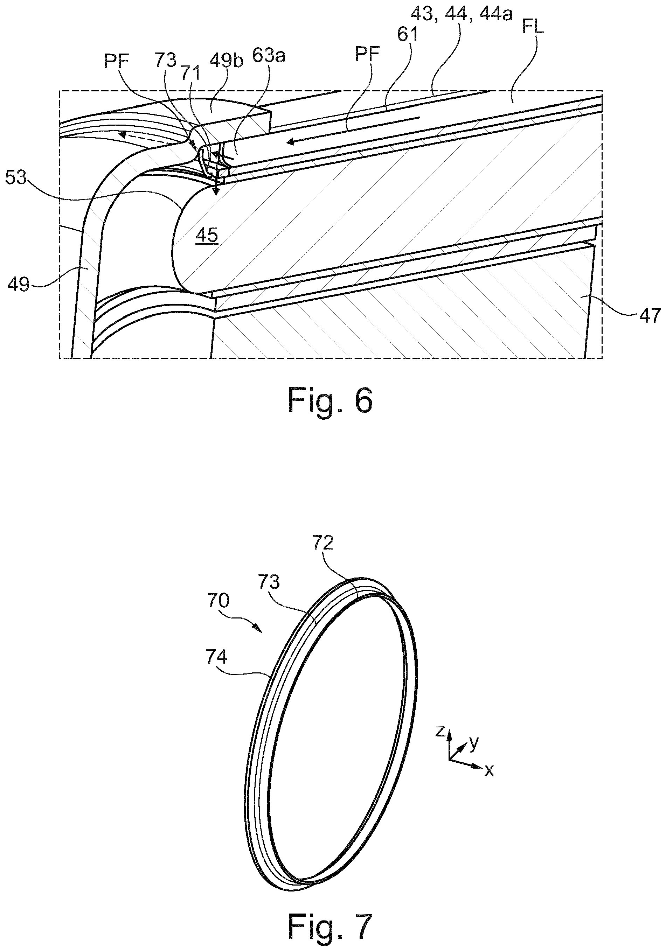

Die ringförmigen Elemente 70 sind in der Figur 7 als Einzelteile dargestellt. Dies umfassen einen ersten Ringabschnitt 72 mit einer Vielzahl von über den Umfang verteilt angeordneten Schlitzen bzw. Bohrungen 73. Der Ringabschnitt 72 weist einen ersten axialen Endbereich auf, der zur dichtenden Anlage an die Stirnseite des Statorkerns 44 ausgebildet ist, und einen zweiten axialen Endbereich, der in einen zweiten radial nach außen verlaufenden Ringabschnitt 74 übergeht. Dieser zweite radial nach außen verlaufende Ringabschnitt 74 dient der dichtenden Anlage an den umlaufenden Rand 49b des Lagerschilds 49.

Der umlaufende radiale Fluidkanal 71 wird jeweils durch die Stirnseiten des Statorkerns 44, die ringförmigen Elemente 70 und die Lagerschilder 49 gebildet.

Ausgehend von der Fluideinlassöffnung 62 wird das Öl zu den beiden Fluidauslassöffnungen 63a, b geführt, gelangt dann in die beidseitig ausgeführten radialen Fluidkanäle 71. Das Öl wird zunächst um 360 Grad um die Fluidkanäle 71 geführt und fließt geleichmäßig durch die über den Umfang der ringförmigen Elemente eingebrachten Schlitze bzw. Bohrungen 73 auf die äußere Umfangsfläche 53 der Wickelköpfe 45 zwecks Kühlung.

Die Fließrichtung und Verteilung des Öls sind schematisch durch die Pfeile PF angezeigt.

In einer nicht erfindungsgemäßen Ausführungsform sind die Schlitze/Bohrungen nicht über dem gesamten Umfang des ersten Ringabschnitts 72 verteilt angeordnet, sondern nur maximal über 180 Grad. Das in den radialen Fluidkanal 71 geführte Öl wird dann in dem Abschnitt ohne Schlitze/Bohrungen zunächst aufgestaut.

Die Schlitze/Bohrungen in dem ringförmigen Element 70 können bei der Fertigung vor einem Blechformen eingebracht werden.

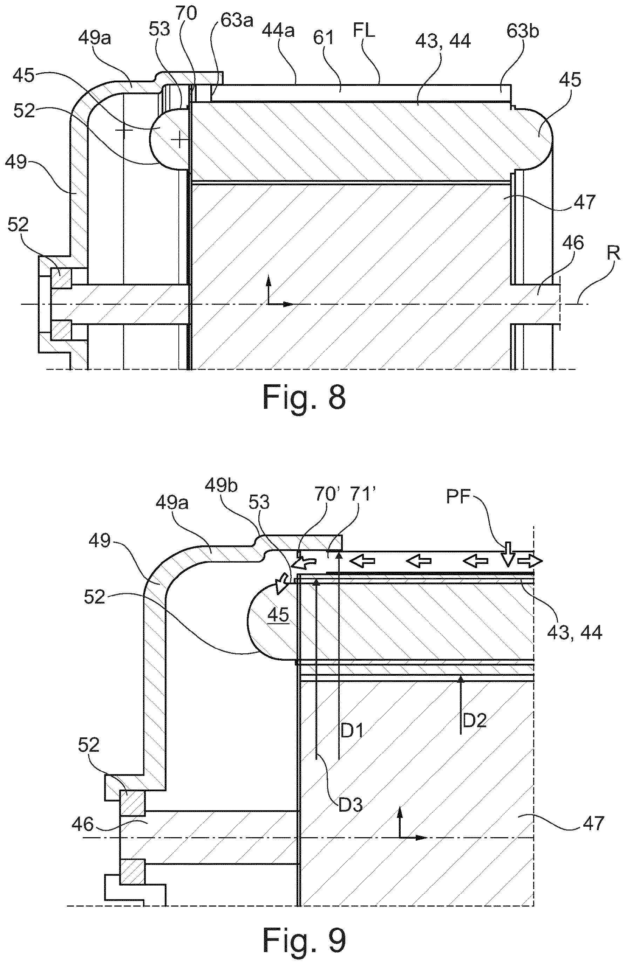

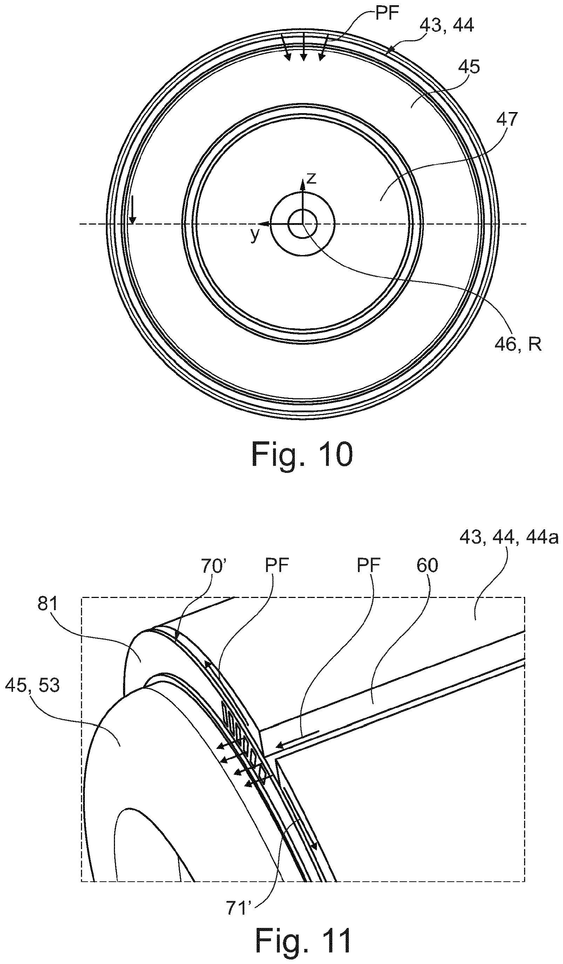

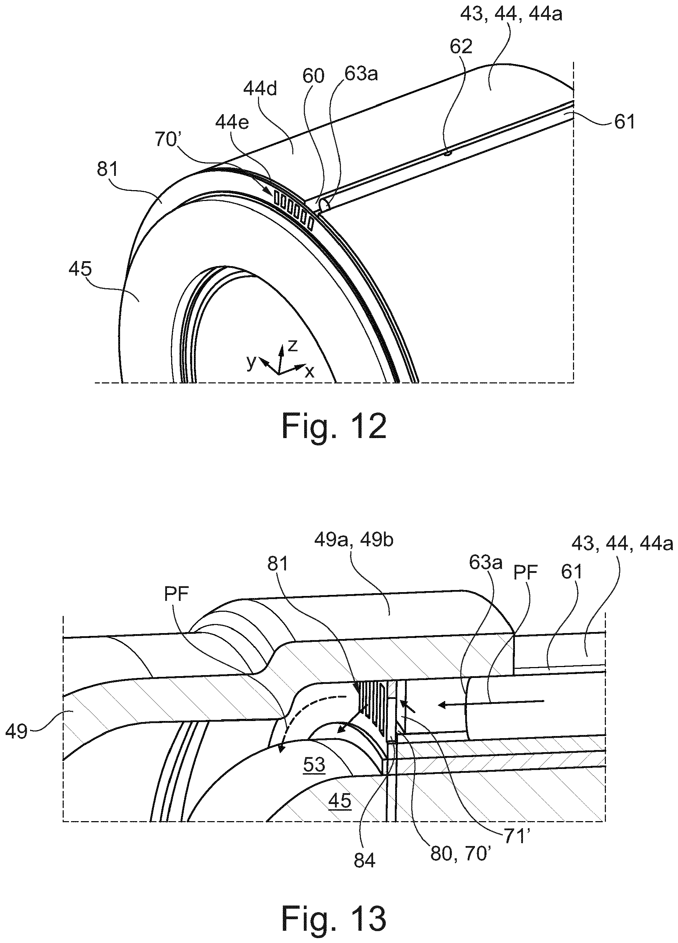

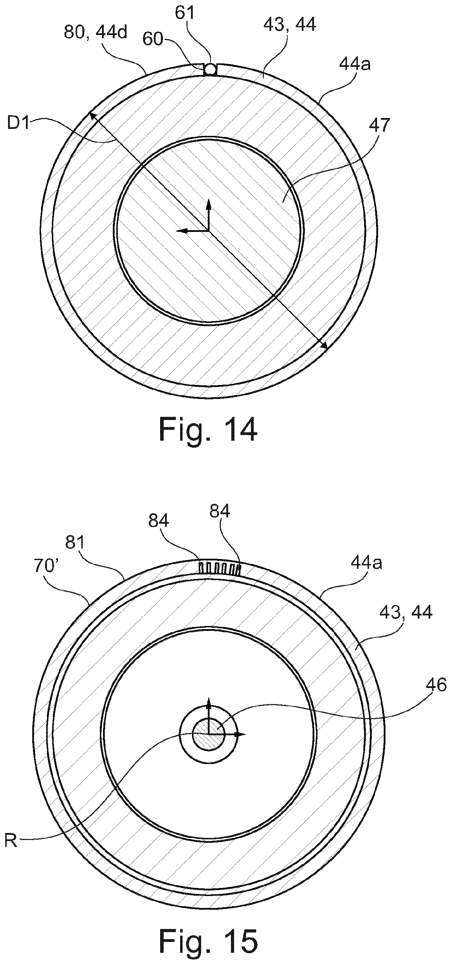

In den Figuren 8 - 15 ist eine erfindungsgemäße Ausführungsform des erfindungsgemäßen Kühlsystems dargestellt, welches nachfolgend näher beschrieben wird.

Gleiche zuvor bereits beschriebene Teile werden mit gleichen Bezugszeichen versehen und an dieser Stelle nicht näher beschrieben.

Im Unterschied zu dem vorstehend beschriebenen nicht erfindungsgemäßen Ausführungsbeispiel wird sowohl der axiale Fluidkanal als auch der radiale Fluidkanal sowie die Schlitze und Bohrungen zur gleichmäßigen Verteilung des Kühlfluids auf die äußere Umfangsfläche 53 der Wickelköpfe 45 durch die Ausgestaltung und Anordnung der endseitigen Statorbleche des Blechpakets des Statorkerns 44 gebildet.

Das aus Statorblechen zusammengefügte Statorblechpaket 44c umfasst dabei einen mittleren Abschnitt 44d und beidseitige Endabschnitte 44e. Das Kühlsystem beinhaltet einen axial verlaufenden Fluidkanal, der in einer axial verlaufenden Nut 60, die in dem mittleren Abschnitt der Außenmantelfläche 44a des Statorblechpakets 44c gebildet ist, verläuft. Die axial verlaufende Nut 60 wird über entsprechend gefertigte Statorbleche gebildet, in die bei der Fertigung zusätzlich zu den üblichen Aussparungen für z.B. die Statorwicklungen eine viereckige oder halbrunde Aussparung an einer Position am Außendurchmesser D1 ausgeführt wird. Beim anschließenden Zusammensetzen der derart gefertigten einzelnen Statorbleche ergibt sich die vorbeschriebene axial verlaufende Nut 60 in dem mittleren Abschnitt 44d.

An diesen mittleren Abschnitt 44d werden bei der Herstellung eine oder mehrere Statorbleche 80 axial angefügt, die einen gegenüber dem Durchmesser D1 geringeren Durchmesser D3 aufweisen. Anschließend an diese Statorbleche 80 werden endseitig Statorbleche 81 abschließend angeordnet, die den Außendurchmesser D1 aufweisen und mit axialen Schlitzen / Durchgangsbohrungen 84 ausgeführt sind. Die Schlitze / Durchgangsbohrungen sind in einem außenliegenden Randbereich der Statorbleche 81 eingebracht, der auf einem Durchmesser kleiner als D1 und größer oder gleich D3 liegt.

Der umlaufende radiale Fluidkanal 71` wird bei diesem Ausführungsbeispiel durch den Statorkern selbst und zwar die Stirnseiten des mittleren Abschnitts 44d des Statorkerns die Statorbleche 80 und die Statorbleche 81 gebildet. Es werden demnach keine zusätzlichen weiteren Bauteile zur Herstellung des Fluidsystems benötigt. Der radiale Fluidkanal 71` wird über die Statorbleche 81, die ringförmigen Elemente 70` bilden begrenzt.

Ausgehend von der Fluideinlassöffnung 62 wird das Öl durch den axialen Fluidkanal zu den beiden Fluidauslassöffnungen 63a, b geführt, gelangt dann in die beidseitig ausgeführten radialen Fluidkanäle 71`. Das Öl wird zunächst um 360 Grad um die Fluidkanäle 71` geführt und fließt geleichmäßig durch die axial in die als ringförmige Elemente 70` ausgebildeten Statorbleche 81 eingebrachten Schlitze bzw. Bohrungen 84 auf die äußere Umfangsfläche 53 der Wickelköpfe 45 zwecks Kühlung.

Die Fließrichtung und Verteilung des Öls ist schematisch durch die Pfeile PF angezeigt.

In einer nicht dargestellten weiteren Ausführungsform kann die axial verlaufende Fluidleitung FL anstelle durch ein separates rohrförmiges Element auch durch die axial verlaufende Nut 60 selbst gebildet werden. Hierbei wird die Fluidleitung FL1 mittels eines länglichen Elementes, welches die Nut abdeckt, fluiddicht verschlossen.

Zeichnerisch dargestellt ist nur eine Seite des Stators 43 mit Wickelkopf 45 und zugeordneten Elementen des Kühlsystems. Die gegenüberliegende zweite Seite ist entsprechend ausgeführt.

### Bezugszeichenliste

- 1: Hybridgetriebe
- 10: Antriebsstrang
- 13: Kraftstofftank
- 14: Doppelkupplungsgetriebe
- 16: Differential
- 18L: linkes angetriebenes Rad
- 18R: rechtes angetriebenes Rad
- 20: zweite Reibkupplung
- 24: Schaltkupplung
- 26: Leistungsübertragungspfad
- 30: erste Reibkupplung
- 31: Schaltkupplung
- 36: Leistungsübertragungspfad
- 40: elektrische Maschine
- 41: Anordnung zur Ansteuerung und Energieversorgung
- 42: Gehäuse
- 43: Stator
- 44: Statorkern
- 45: Wickelköpfe
- 46: Motorwelle
- 47: Rotor
- 49: Lagerschild
- 60: axial verlaufende Nut
- 61: rohrförmiges Element
- 62: Fluideinlassöffnung
- 63a, b: Fluidaulassöffnung
- 70, 70`: ringförmiges Element
- 71, 71`: radialer Fluidkanal
- 80: Statorblech
- 81: Statorblech

## Patentansprüche

1. Elektrische Maschine (40) für einen Antriebsstrang (10) eines Kraftfahrzeugs, mit
• einem Gehäuseabschnitt (42a)
• einem Stator (43), der in Bezug auf den Gehäuseabschnitt (42a) festgelegt ist und einen Statorkern (44) aufweist, an dem Statorwicklungen festgelegt sind, die an den Stirnseiten des Statorkerns (44) Wickelköpfe (45) bilden
• einem Rotor (47) der drehfest auf einer Motorwelle (46) angeordnet ist, der in Bezug auf den Stator (43) drehbar gelagert ist,
• einem Kühlsystem zum Kühlen des Stators (43), wobei das Kühlsystem mindestens einen Fluidkanal (FL) umfasst, der sich entlang eines Umfangsabschnitts (44a) des Stators (43) erstreckt und durch den ein Kühlfluid führbar ist, wobei
ein axial verlaufender Fluidkanal (FL) im äußeren Umfangsbereich (44a) des Statorkerns (44) eingebracht ist, der in beidseits radial verlaufende im Bereich der Wickelköpfe (45) angeordnete Fluidkanäle (71') mündet, wobei die radial verlaufenden Fluidkanäle (71') jeweils durch ein Element (70') gebildet und/oder begrenzt werden, und wobei in das Element (70') Durchgangsschlitze und/oder Durchgangsbohrungen (73, 84) zumindest über einen Abschnitt des Umfangs eingebracht sind, die eine gleichmäßige Zuführung des Kühlfluids auf den äußeren Umfangsbereich der Wickelköpfe (45) zwecks Kühlung bewirken, **dadurch gekennzeichnet, dass** genau ein axial verlaufender Fluidkanal (FL) im äußeren Umfangsbereich (44a) des Statorkerns (44) eingebracht ist, und dass die radial verlaufenden Fluidkanäle (71') durch ein ringförmiges Element (70') gebildet und/oder begrenzt werden, und dass die ringförmigen Elemente (70') über endseitig an einen mittleren Abschnitt (44d) des Statorkerns (44) angefügte Statorbleche (81) gebildet werden, die mit axialen Schlitzen/ Durchgangsbohrungen (84) ausgeführt sind, und dass die umlaufenden Fluidkanäle (71') über ein oder mehrere Statorbleche (80) mit reduziertem Außendurchmesser D3, die Statorbleche (81) und die Stirnseiten des mittleren Abschnitts (44d) gebildet werden.

2. Elektrische Maschine (40) nach Anspruch 1, **dadurch gekennzeichnet, dass** das Kühlfluid ein Öl ist.

3. Elektrische Maschine (40) nach Anspruch 1 oder 2, **dadurch gekennzeichnet, dass** der Statorkern (44) aus einer Vielzahl von Statorblechen zu einem Statorblechpaket (44b) zusammengesetzt ist und eine Außenmantelfläche (44a) mit einem Durchmesser D1 aufweist.

4. Elektrische Maschine (40) nach einem der vorangehenden Ansprüche, **dadurch gekennzeichnet, dass** die Gehäuseabschnitte (42a) als Lagerschilde (49) ausgebildet sind, die beidseits orthogonal an der Motorwelle (46) angeordnet sind und jeweils an ihrem äußeren Umfangsbereich (49a) einen axial nach innen sich erstreckenden umlaufenden Rand (49b) umfassen.

5. Elektrische Maschine (40) nach Anspruch 1, **dadurch gekennzeichnet, dass** der Fluidkanal (FL) als rohrförmiges Element (61) in einer axial verlaufenden Nut (60), die in der Außenmantelfläche (44a) des Statorkerns (44) gebildet ist, verläuft.

6. Elektrische Maschine (40) nach Anspruch 1, **dadurch gekennzeichnet, dass** der Fluidkanal (FL) durch eine axial verlaufende Nut (60), die in der Außenmantelfläche (44a) des Statorkerns (44) gebildet ist und ein zugeordnetes deckelförmiges Element gebildet ist.

## Claims

1. Electric machine (40) for a drivetrain (10) of a motor vehicle, having
• a housing section (42a),
• a stator (43) which is fixed in relation to the housing section (42a) and has a stator core (44) to which stator windings are fixed, the stator windings forming winding heads (45) on the end faces of the stator core (44),
• a rotor (47) which is arranged for conjoint rotation on a motor shaft (46) which is mounted rotatably in relation to the stator (43),
• a cooling system for cooling the stator (43), wherein the cooling system comprises at least one fluid duct (FL) which extends along a circumferential section (44a) of the stator (43) and through which a cooling fluid can be guided, wherein
an axially running fluid duct (FL) is provided in the outer circumferential region (44a) of the stator core (44), the fluid duct leading into fluid ducts (71') which run radially on both sides and are arranged in the region of the winding heads (45), wherein the radially running fluid ducts (71') are each formed and/or delimited by an element (70'), and wherein through slots and/or through bores (73, 84) are introduced into the element (70') at least over a section of the circumference, the through slots and/or through bores bringing about a uniform supply of the cooling fluid onto the outer circumferential region of the winding heads (45) for cooling purposes, **characterized in that** precisely one axially running fluid duct (FL) is introduced in the outer circumferential region (44a) of the stator core (44), and **in that** the radially running fluid ducts (71') are formed and/or delimited by an annular element (70'), and **in that** the annular elements (70') are formed via stator plates (81) which are joined on the end sides to a central section (44d) of the stator core (44) and are formed with axial slots/through bores (84), and **in that** the encircling fluid ducts (71') are formed via one or more stator plates (80) with a reduced outside diameter D3, the stator plates (81) and the end faces of the central section (44d).

2. Electric machine (40) according to Claim 1, **characterized in that** the cooling fluid is an oil.

3. Electric machine (40) according to Claim 1 or 2, **characterized in that** the stator core (44) is assembled from a multiplicity of stator plates to form a laminated stator core (44b) and has an outer lateral surface (44a) with a diameter D1.

4. Electric machine (40) according to one of the preceding claims, **characterized in that** the housing sections (42a) are designed as end shields (49), are arranged orthogonally on both sides on the motor shaft (46) and each comprise, on their outer circumferential region (49a), an encircling edge (49b) extending axially inwards.

5. Electric machine (40) according to Claim 1, **characterized in that** the fluid duct (FL) runs as a tubular element (61) in an axially running groove (60) which is formed in the outer lateral surface (44a) of the stator core (44).

6. Electric machine (40) according to Claim 1, **characterized in that** the fluid duct (FL) is formed by an axially running groove (60), which is formed in the outer lateral surface (44a) of the stator core (44), and by an associated cover-shaped element.

## Revendications

1. Machine électrique (40) pour une chaîne cinématique (10) d'un véhicule automobile, comprenant
• une partie de boîtier (42a),
• un stator (43) qui est fixé par rapport à la partie de boîtier (42a) et présente un noyau de stator (44) au niveau duquel sont fixés des enroulements de stator qui forment des têtes d'enroulement (45) sur les faces frontales du noyau de stator (44),
• un rotor (47) qui est disposé de manière verrouillée en rotation sur un arbre de moteur (46) qui est monté rotatif par rapport au stator (43),
• un système de refroidissement pour refroidir le stator (43), dans laquelle le système de refroidissement comprend au moins un conduit pour fluide (FL) qui s'étend le long d'une partie circonférentielle (44a) du stator (43) et à travers lequel un fluide de refroidissement peut être conduit, dans laquelle
un conduit pour fluide (FL) s'étendant axialement est aménagé dans la partie circonférentielle extérieure (44a) du noyau de stator (44) et débouche sur des conduits pour fluide (71') s'étendant radialement des deux côtés et disposés dans la zone des têtes d'enroulement (45), dans laquelle les conduits pour fluide (71') s'étendant radialement sont respectivement formés et/ou limités par un élément (70'), et dans laquelle des fentes traversantes et/ou des alésages traversants (73, 84) sont aménagés dans l'élément (70') au moins sur une partie de la circonférence et provoquent une alimentation homogène du fluide de refroidissement sur la zone circonférentielle extérieure des têtes d'enroulement (45) en vue du refroidissement,
**caractérisée en ce qu'**exactement un conduit pour fluide (FL) s'étendant axialement est aménagé dans la zone circonférentielle extérieure (44a) du noyau de stator (44), et **en ce que** les conduits pour fluide (71') s'étendant radialement sont formés et/ou limités par un élément annulaire (70'), et **en ce que** les éléments annulaires (70') sont formés par des tôles de stator (81) ajoutées côté extrémité à une partie centrale (44d) du noyau de stator (44), qui sont réalisées avec des fentes axiales/ des alésages traversants (84), et **en ce que** les conduits pour fluide périphériques (71') sont formés par une ou plusieurs tôles de stator (80) à diamètre extérieur réduit D3, les tôles de stator (81) et les faces frontales de la partie centrale (44d).

2. Machine électrique (40) selon la revendication 1, **caractérisée en ce que** le fluide de refroidissement est de l'huile.

3. Machine électrique (40) selon la revendication 1 ou 2, **caractérisée en ce que** le noyau de stator (44) est assemblé à partir d'une pluralité de tôles de stator en un empilement de tôles de stator (44b) et présente une surface latérale extérieure (44a) de diamètre D1.

4. Machine électrique (40) selon l'une quelconque des revendications précédentes, **caractérisée en ce que** les parties de boîtier (42a) sont réalisées sous forme de flasques (49) qui sont disposés des deux côtés orthogonalement sur l'arbre de moteur (46) et comprennent respectivement sur leur zone circonférentielle extérieure (49a) un bord périphérique (49b) s'étendant axialement vers l'intérieur.

5. Machine électrique (40) selon la revendication 1, **caractérisée en ce que** le conduit pour fluide (FL) s'étend sous forme d'élément tubulaire (61) dans une rainure (60) s'étendant axialement qui est formée dans la surface latérale extérieure (44a) du noyau de stator (44).

6. Machine électrique (40) selon la revendication 1, **caractérisée en ce que** le conduit pour fluide (FL) est formé par une rainure (60) s'étendant axialement, qui est formée dans la surface latérale extérieure (44a) du noyau de stator (44), et par un élément en forme de couvercle associé.
